(19)

Europäisches
Patentamt
European
Patent Office
Office européen
des brevets

(11) **EP 2 835 990 A1**

(12) **EUROPEAN PATENT APPLICATION**

(43) Date of publication:
**11.02.2015 Bulletin 2015/07**

(21) Application number: **13306141.6**

(22) Date of filing: **09.08.2013**

(51) Int Cl.:
*H04W 4/00* (2009.01)          *H04L 5/00* (2006.01)
*H04L 1/00* (2006.01)          *H04L 1/08* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Baker, Matthew
Swindon, Wiltshire SN5 7DJ (GB)**

• **Wong, Shin Horng
Swindon, Wiltshire SN5 7DJ (GB)**

(74) Representative: **Coghlan, Judith Elizabeth Kensy
et al
Script IP Limited
Turnpike House
18 Bridge Street
Frome BA11 1BB (GB)**

Remarks:
Amended claims in accordance with Rule 137(2)
EPC.

(54) **Communication technique for delivering information to users experiencing high attenuation**

(57)     A wireless telecommunication network base station method, corresponding wireless telecommunication network user equipment method, computer program products and network nodes operable to perform those methods. The base station method comprises: encoding resource allocation information relating to a location of a system information block in a master information block. The user equipment method comprises: decoding resource allocation information relating to a location of a system information block in a master information block. Aspects and embodiments described may provide an efficient method which can be used to indicate an appropriate resource allocation for the SIB for MTC UE requiring coverage extension.

PBCH transmission for coverage enhancement

FIG. 2

**Description**

FIELD OF THE INVENTION

The present invention relates to wireless telecommunications methods, a computer program product and network nodes.

BACKGROUND

Wireless telecommunications systems are known. In a cellular system, radio coverage is provided to user equipment, for example, mobile phones, in areas known as cells. A base station is located in each cell to provide radio coverage. User equipment in each cell receives information and data from a base station and can be operable to transmit information and data to the base station.

Information and data transmitted by a base station to user equipment occurs on channels of radio carriers known as downlink channels. Information and data transmitted by user equipment to the base station occurs on channels of radio carriers known as uplink channels. Although the deployment of base stations is largely controlled or controllable by a network operator, the deployment of user equipment is not. The deployment of user equipment within a network can cause unexpected consequences.

Accordingly, it is desired to provide techniques for communicating with user equipment in a network.

SUMMARY

A first aspect provides a wireless telecommunication network base station method comprising: encoding resource allocation information relating to a location of a system information block in a master information block.

The first aspect recognises that one issue which may occur in the deployment of user equipment within a network is that they can become deployed in areas suffering from very high attenuation. Such high attenuation can cause user equipment to be unable to decode downlink information which can be essential for being able to access appropriate downlink traffic. If deployed in such areas of high attenuation, user equipment may be effectively unable to receive traffic from a base station.

The first aspect recognises that techniques for providing information to user equipment in high attenuation deployments exist. The first aspect also recognises that there is an emerging class of user equipment (such as machine type communication devices which may be used on smart meters) which tend to be immobile once installed and thus, although mobile user equipment may simply find it inconvenient when located in high attenuation areas and yet have restored coverage when the user equipment moves to a lower attenuation, such stationary user equipment may be permanently located in a region of high attenuation and may suffer from little, or no normal network coverage.

Techniques for ensuring some kind of communication can occur for user equipment located in high attenuation areas typically comprise, for example, implementing a different communication technique at the base station; for example, large numbers of repetitions of transmissions of a single message such that user equipment located in a high attenuation area has an opportunity to receive and re-compile that message. That is to say, by repeating transmission of a message, user equipment may be operable to combine successive repetitions in order to increase the likelihood that a message can be decoded. Such repetitions may be used to increase coverage provided in areas of high attenuation.

A Machine Type Communication (MTC) device is a user equipment used by machine for a specific operation. One example of such an MTC device would be a smart utility meter. As described, some such devices may be located in areas of particularly high attenuation; for example, in basements which suffer from high penetration loss. It can therefore be difficult for those MTC devices to communicate with a network. Coverage enhancement techniques aim to extend coverage provided to such MTC user equipment by approximately 15 dB. Such coverage enhanced user equipment are referred to as CE-MTC UE (Coverage Enhanced MTC UE). In order to extend coverage to such user equipment, the network must be operable without extending total transmission power of a base station (for example, an eNode B) or the total transmission power of user equipment. Repetition has been identified as the main method. That is to say, repetition represents a means to extend coverage to user equipment in a particularly high attenuation area. The number of required repetitions is significant and maybe in the hundreds. Such a level of repetition has significant impact on the spectral efficiency of a network. It will be understood that a network has to provide repeat SIBs (System Information Blocks) and reserve additional RACH resources when operating in coverage extension mode.

System Information Blocks (SIBs) contain essential information required by user equipment to access a network. In an existing system in LTE, a Physical Downlink Shared Channel (PDSCH) resource allocation of the SIB is indicated by the Physical Downlink Control Channel (PDCCH). In order to extend MTC-UE coverage by 15 dB, the PDCCH and PDSCH that indicates and carries the SIB typically requires significant repetition, of the order of hundreds of repetitions.

It will be appreciated that not all cells or users in a network require full 15 dB coverage extension and since a significant amount of repetitions are required to send a message, setting such a uniform implementation of coverage extension target could result in a significant degradation of network spectral efficiency. Aspects and embodiments aim to offer an efficient method which can be used to indicate an appropriate resource allocation for the SIB for MTC UE requiring coverage extension.

The first aspect provides a method to signal information in a MIB to user equipment to indicate the resource allocation of the SIB. The information signaled to users in the MIB can be used to determine the Physical Resource Blocks (PRB) containing the SIB.

In one embodiment, encoding resource allocation information comprises encoding a location index for inclusion in the master information block, the location index identifying a location of at least one physical resource block containing the system information block. In one embodiment, the location index comprises one of a plurality of values, each value identifying a different location of at least one physical resource block containing the system information block. Accordingly, the information signaled in a MIB to user equipment may contain a "resource allocation" index. Each resource allocation index may be such that it points to a PRB allocation that contains the SIB. The possible PRB allocations are predefined, for example in the specifications and are thus known to user equipment. Accordingly, only an index, rather than full PRB locations need be included in a MIB.

In one embodiment , the method comprises: encoding, on a first downlink channel between the base station and user equipment carrying the master information block, a repetition index identifying a number of times that transmissions are repeated by at least one other channel between the base station and user equipment. In one embodiment, the repetition index comprises one of a plurality of values, each value identifying a different number of times that that transmissions are repeated by the at least one other channel. In one embodiment, the repetition index forms part of the MIB. In one embodiment, the repetition index is carried by the same channel as the MIB. Accordingly, a resource allocation index can be jointly encoded with a repetition index proposed to be transmitted in the MIB. The repetition index is indicative of a repetition level implemented in relation to a PDSCH and PUCCH for common control channels and initial access. The resource allocation index and repetition index together can be used to determine the Physical Resource Blocks (PRB) containing the SIB and the number of (consecutive) subframes where those PRBs would be repeated. The joint encoding of these two indices may allow for a reduced number of bits to be used for the combined information compared to use of a separate coding in relation to each index. For example, 3 alternative repetition levels and 5 alternative resource allocations can be jointly encoded in 4 bits, whereas 2+3=5 bits would be needed for separate encoding.

In one embodiment, the method comprises: selecting at least one of the location index and the repetition index to serve different user equipment. Alternatively, the location index and repetition index may be set on a per cell basis, all users in that cell operating identically. Some cells may be in a position, due to the location of users within that cell, to choose a more spectrally efficient implementation and other cells may require more repetition to support user equipment.

In one embodiment, the method further comprises repeating the master information block including the encoded resource allocation information at least once within a radio frame of a downlink transmission channel. In one embodiment, each radio frame comprises a plurality of sub-frames and the master information block is repeated in a corresponding plurality of sub-frames.

In one embodiment, the method comprises: repeating said system information block at least once within a radio frame of a downlink transmission channel. In one embodiment, each radio frame comprises a plurality of sub-frames and the system information block is repeated in a corresponding plurality of sub-frames.

It has been proposed that one way to implement support for users in a fixed high attenuation deployment and provide coverage extension of PBCH, is to allow the PBCH to be transmitted in 2 modes consisting of: a short intense burst of high PBCH repetitions followed by a long period of legacy PBCH transmission. Such a transmission mode may reduce the resource required for PBCH repetitions and takes into account that the MIB is unlikely to be read very often for MTC UE. Since the SIB is also not expected to be read very often, a similar transmission regime may be implemented in relation to the SIB. In other words, a SIB can also be repeated in an intense burst period, like that which can be implemented in respect of a MIB. In some embodiments, a SIB intense burst period may be offset from a MIB burst period and the SIB intense burst may start after that of the PBCH (carrying the MIB).

A second aspect provides a computer program product operable, when executed on a computer to perform a method according to the first aspect.

A third aspect provides a wireless telecommunication network base station, comprising: encoding logic operable to encode resource allocation information relating to a location of a system information block in a master information block.

In one embodiment, encoding resource allocation information comprises encoding a location index for inclusion in the master information block, the location index identifying a location of at least one physical resource block containing the system information block.

In one embodiment, the location index comprises one of a plurality of values, each value identifying a different location of at least one physical resource block containing the system information block.

In one embodiment , the encoding logic is operable to encode, on a first downlink channel between the base station and user equipment carrying the master information block, a repetition index identifying a number of times that transmissions are repeated by at least one other channel between the base station and user equipment.

In one embodiment, the repetition index comprises one of a plurality of values, each value identifying a different number of times that that transmissions are repeated by the at least one other channel.

In one embodiment, the base station comprises: selection logic operable to select at least one of the location index and the repetition index to serve different user equipment.

In one embodiment, the base station comprises: repetition logic operable to repeat the master information block including the encoded resource allocation information at least once within a radio frame of a downlink transmission channel

In one embodiment, each radio frame comprises a plurality of sub-frames and the master information block is repeated in a corresponding plurality of sub-frames.

A fourth aspect provides a wireless telecommunication network user equipment method comprising: decoding resource allocation information relating to a location of a system information block from a master information block.

In one embodiment, the method comprises: decoding resource allocation information relating to a location of a system information block from an indication of system bandwidth. In some embodiments, system bandwidth maybe used to implicitly provide additional information that can be used to determine the PRB allocation containing the SIB. Such an embodiment recognizes that a message spread across bandwidth may benefit from frequency diversity and it can therefore be beneficial to spread the SIB message as far as possible within available system bandwidth. Accordingly, resource allocation can be determined at least partly from a knowledge of system bandwidth.

In one embodiment, the method comprises: decoding resource allocation information relating to a location of a system information block from an indication of Cell ID. In some embodiments, a Cell ID is used as additional information required to determine the PRB allocation for SIB. A Cell ID can be used, for example, as an indication of an amount of PRB offset from the start of PRB resource. Such am embodiment can be useful to prevent neighbor cells from using the same PRB for SIB. Use of the same PRB for SIB in neighbouring cells may cause interference and it can be useful to aim to avoid such interference.

A fifth aspect provides a computer program product operable, when executed on a computer, to perform the method of the fourth aspect.

A sixth aspect provides a wireless telecommunication network user equipment, comprising: decoding logic operable to decode resource allocation information relating to a location of a system information block from a master information block.

In one embodiment, the decoding logic is operable to decode resource allocation information relating to a location of a system information block from an indication of system bandwidth.

In one embodiment, the decoding logic is operable to decode resource allocation information relating to a location of a system information block from an indication of Cell ID.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates schematically a network deployment capable of coverage enhancement;
Figure 2 illustrates schematically transmission of a physical broadcast channel (PBCH) by an eNodeB operating in coverage enhancement according to one embodiment;
Figure 3 illustrates schematically System Information Block (SIB) Physical Resource Block (PRB) allocation according to one embodiment; and
Figure 4 illustrates schematically PBCH and SIB transmission in coverage enhancement according to one embodiment.

DESCRIPTION OF THE EMBODIMENTS

As mentioned above, one difficulty with deploying some types of user equipment is that they are located in areas which suffer from high losses; for example, high penetration losses due to their position within a building. Therefore, it is difficult for those user equipment to communicate with a network. One example of such user equipment is a Machine Type Communication device typically used by a machine such as, for example, a Smart utility meter. Some such Smart utility meters may be located in basements or other areas which suffer from high attenuation of radio signals. It will be understood that those user equipment are substantially static and are unlikely to move to a region suffering from less attenuation. Some of those Smart utility meters operate in such a manner that it is desired to extend the coverage of those devices by 15 dB. According to the operation of some networks, a base station may be operable to perform a special mode of operation at periods of low network traffic. That special mode of operation, known as coverage enhancement, is such that messages sent to users in regions of very high attenuation are repeated a number of times. In particular, some messages may be repeated a number of times within a radio frame of a downlink transmission channel. Repeating messaging enables energy and information from successive repetitions to be combined in order to improve the likelihood of user equipment being able to decode information contained in such a message. However, in order to achieve coverage in very high penetration loss areas, the extent of repetition within a radio frame may result in virtually the whole resource of the radio frame over a 40 ms window being required to be used for transmissions of, for example, a master information block, particularly for a narrow bandwidth carrier.

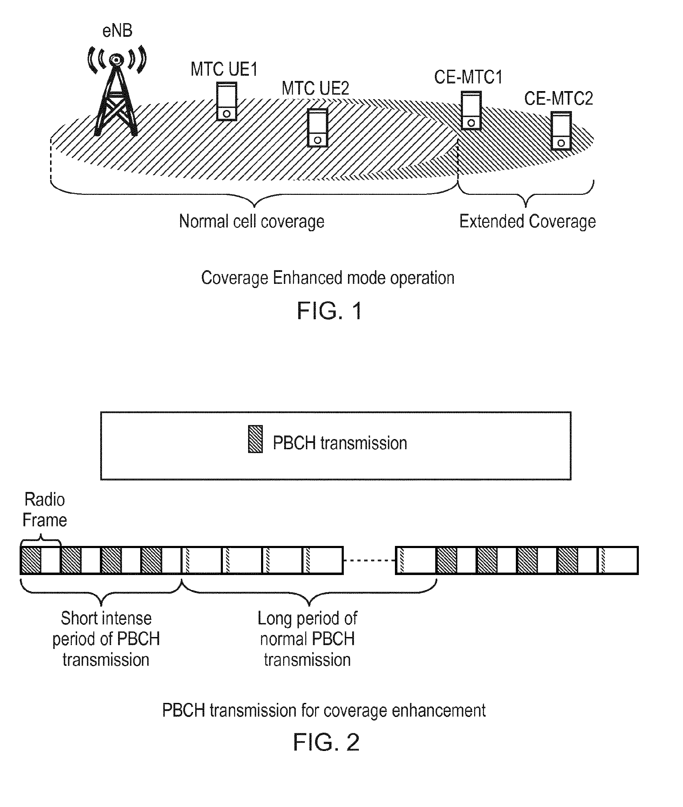

Figure 1 illustrates schematically a base station, in this case an eNode B, which is capable of operating a normal coverage mode and so-called "coverage enhancement" mode. A number of Machine Type Communication user equipment are illustrated which exist within the coverage region of the eNode B. It will be seen that two of those Machine Type Communication user equipment, MTC UE1 and MTC UE2, operate within a region of normal cell coverage provided by the eNode B. Two further user equipment: CE-MTC1 and CE-MTC2, are only able to communicate with the eNode B when it operates in coverage enhanced mode. That is to say, the radio condition of the location where those user equipment are situated is such that those user equipment can only successfully receive messaging from the eNode B when a repetitive mode of communication is implemented at the eNode B. It will be understood that MTC UE1 and MTC UE2 may be served by the eNode B at all times whilst CE-MTC1 and CE-MTC2 may only operate when the eNode B is operating in coverage enhanced mode.

Aspects and embodiments recognise that an eNode B or other network access node may operate in two modes. Firstly, an eNode B may operate in a normal mode. That mode will be understood to be essentially legacy eNode B operation, such that there is no coverage enhancement feature for MTC devices. In this mode, the eNode B can only support normal user equipment which fall within normal radio coverage. Secondly, an eNode B may operate in coverage enhancement mode (CE mode). According to such a mode, the coverage for physical channels required for coverage enhanced MTC user equipment can be enhanced. Heavy repetition is performed on those physical channels. In such a mode, the eNode B may support both normal user equipment and coverage enhanced MTC user equipment.

System Information Blocks (SIBs) contain essential information required user equipment to access a network. In an existing system in LTE, a Physical Downlink Shared Channel (PDSCH) resource allocation of the SIB is indicated by the Physical Downlink Control Channel (PDCCH). In order to extend MTC-UE coverage by 15 dB, the PDCCH and PDSCH that indicates and carries the SIB typically requires significant repetition, of the order of hundreds of repetitions.

It will be appreciated that not all cells or users in a network require full 15 dB coverage extension and since a significant amount of repetitions are required to send a message, setting such a uniform implementation of coverage extension target would result in a significant degradation of network spectral efficiency. Aspects and embodiments aim to offer an efficient method to indicate an appropriate resource allocation for the SIB for MTC UE requiring coverage extension.

It is, of course, possible to include the SIB in a Master Information Block (MIB). Such an arrangement can avoid a need for a user to decode both a MIB and a separate SIB. There are, however, problems with such a solution, including: an increase to MIB information bits which reduces PBCH robustness which may, in turn, require the PBCH coverage to be further enhanced (more repetitions); a reduction in flexibility when allocating the SIB since the SIB would be confined to a central 6 PRBs where the MIB is located which reduces available frequency diversity; and typically a SIB has a longer period than that of a MIB.

It is also possible to arrange that a resource allocation indication in the PDCCH can be bypassed and that a MTC-UE can be configured to directly decode the PDSCH containing the SIB. For flexibility, the SIB could occupy several candidate PDSCH allocations and the UE would blind decode these candidates in order to detect and read the SIB. The problems with this solution are: (i) the UE would require new blind decoding methods for PDSCH which have more information bits compared to those in PDCCH. This would increase the UE complexity which defeats the purpose of trying to provide a low cost MTC UE. (ii) It is likely that the candidates are predefined and it is therefore difficult to achieve different levels of coverage extension.

Overview

Before discussing a number of examples in more detail, an overview will be provided: Aspects and embodiments described herein provide a method to signal information in a MIB to user equipment to indicate the resource allocation of the SIB. The information signaled to users in the MIB can be used to determine the Physical Resource Blocks (PRB) containing the SIB.

In one embodiment, the information signaled in a MIB to user equipment may contain a "resource allocation" index. Each resource allocation index may be such that it points to a PRB allocation that contains the SIB. The possible PRB allocations are predefined, for example in the specifications and are thus known to user equipment. Accordingly, only an index, rather than full PRB locations need be included in a MIB.

In some embodiments, a resource allocation index can be jointly encoded with a repetition index proposed to be transmitted in the MIB. The repetition index is indicative of a repetition level implemented in relation to a PDSCH and PUCCH for common control channels and initial access. The resource allocation index and repetition index together can be used to determine the Physical Resource Blocks (PRB) containing the SIB and the number of (consecutive) subframes where those PRBs would be repeated. The joint encoding of these two indices may allow for a reduced number of bits to be used for the combined information compared to use of a separate coding in relation to each index. For example, 3 alternative repetition levels and 5 alternative resource allocations can be jointly encoded in 4 bits, whereas 2+3=5 bits would be needed for separate encoding.

In some embodiments, system bandwidth may be used to implicitly provide additional information that can be used to determine the PRB allocation containing the SIB. Such an embodiment recognizes that a message spread across bandwidth may benefit from frequency diversity and it can therefore be beneficial to spread the SIB message as far as possible within available system bandwidth. Accordingly, resource allocation can be determined at least partly from a knowledge of system bandwidth.

In some embodiments, a Cell ID is used as additional information required to determine the PRB allocation for SIB. A Cell ID can be used, for example, as an indication of an amount of PRB offset from the start of PRB resource. Such an embodiment can be useful to prevent neighbor cells from using the same PRB for SIB. Use of the same PRB for SIB in neighbouring cells may cause interference and it can be useful to aim to avoid such interference.

It has been proposed that one way to implement support for users in a fixed high attenuation deployment and provide coverage extension of PBCH, is to allow the PBCH to be transmitted in 2 modes consisting of: a short intense burst of high PBCH repetitions followed by a long period of legacy PBCH transmission.

An example of such transmission is shown in Figure 2. Such a transmission mode may reduce the resource required for PBCH repetitions and takes into account that the MIB is unlikely to be read very often for MTC UE. Since the SIB is also not expected to be read very often, a similar transmission regime may be implemented in relation to the SIB. In some embodiments, a MIB including a Cell ID indicates the SIB transmission pattern, for example: the start System Frame Number (SFN) of the SIB transmission can be dependent on the Cell ID and the end of the SIB can be found by working out the amount of repetitions from the MIB info.

### Example 1

Consider a network with the following. Let $B$ be the system bandwidth in number of PRBs:

    1) System bandwidth = 5 MHz or $B$=25 PRBs.
    2) Cell ID = 60
    3) 1 bit Repetition Index:

        a. Repetition Index 0: 100× repetition on the PDSCH
        b. Repetition Index 1: 200× repetition on the PDSCH

In this implementation, the resource allocation index is 1 bit giving two types of resource allocation. Let $N_{PRB}$ be the number of PRBs used to carry the SIB, the resource allocation index has the following meaning:

    1) Resource Allocation Index 0: $N_{PRB}$ = 2 PRBs to be spread with a minimum gap of $K_0$ PRB between PRBs
    2) Resource Allocation Index 1: $N_{PRB}$ = 4 PRBs to be spread with a minimum gap of $K_1$ PRB between PRBs

The value $K_0$ and $K_1$ are dependent upon the system bandwidth and can be predefined in the specifications. In this example, $K_0$ =10 PRBs and $K_1$ = 5 PRBs.

The information above can be obtained when a user has successfully decoded the MIB. In this example, the MIB broadcast:

    1) Repetition Index = 0
    2) Resource Allocation Index = 1

With repetition index = 0, the amount of repetition on PDSCH is 100×. In this example, it is assumed that each PRB can carry a self contained (decodable) SIB and therefore in each subframe, the SIB is repeated 4 times since $N_{PRB}$=4. The total amount of repetition used in the PDSCH to carry the SIB is therefore 25×.

The allocation can be implemented in a similar manner to that used when calculating a distributed EPDCCH candidate (except that, in this example, there is only 1 candidate). It will be appreciated that other functions are feasible. The UE is operable, in this instance, to calculate an offset $O_{PRB}$ indicating the beginning of the SIB's PRB as follows:

$$O_{PRB} = Cell\_ID \bmod B$$

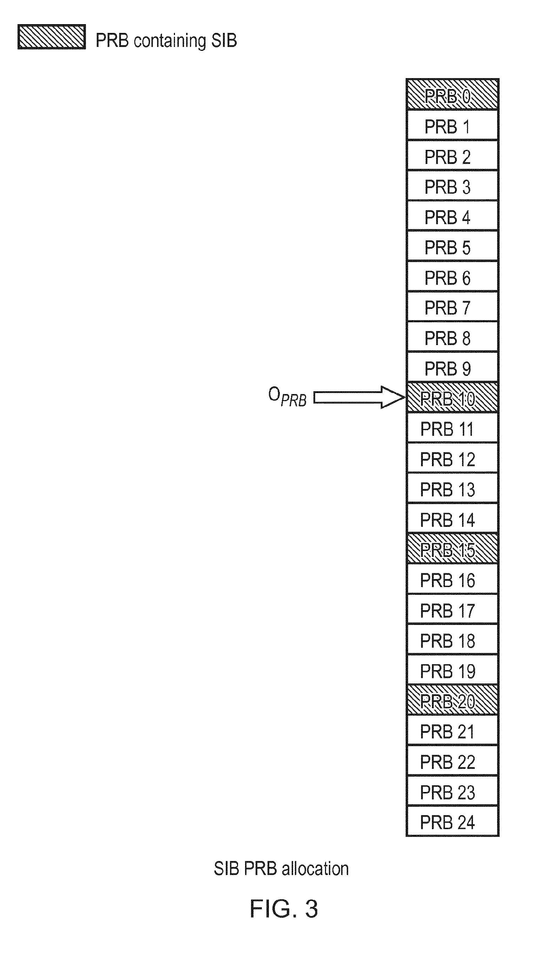

In this example, the offset $O_{PRB}$ = 10. The PRB allocations containing the SIB according to this example are shown schematically in Figure 3.

### Example 2

The parameters as in Example 1 are reused. A PBCH transmission similar to that shown in Figure 2 is assumed where the intense period has a cycle of $C_{PBCH}$ = 64 radio frames and that the PBCH intense repetition period last for $P_{PBCH}$ = 6 radio frames. The repetition period $P_{PBCH}$ can be obtained from the repetition index, which indicates the amount of repetition used for PBCH during the intense burst period. Using a similar method for HS-DSCH DRX, the intense PBCH repetition occurs if the current SFN for the following equation is true:

$$\left(SFN - Cell\_ID\right) \bmod C_{PBCH} < P_{PBCH}$$

The corresponding SIB (25×) repetitions will start after the end of the PBCH intense burst period. It is assumed that the UE would only read the SIB once it has successfully decoded the PBCH and hence, it makes sense for the SIB to start after the PBCH intense burst period. The start of the SIB transmission occurs if the current SFN for the following equation is true:

$$\left(SFN - Cell\_ID\right) \bmod C_{PBCH} = P_{PBCH}$$

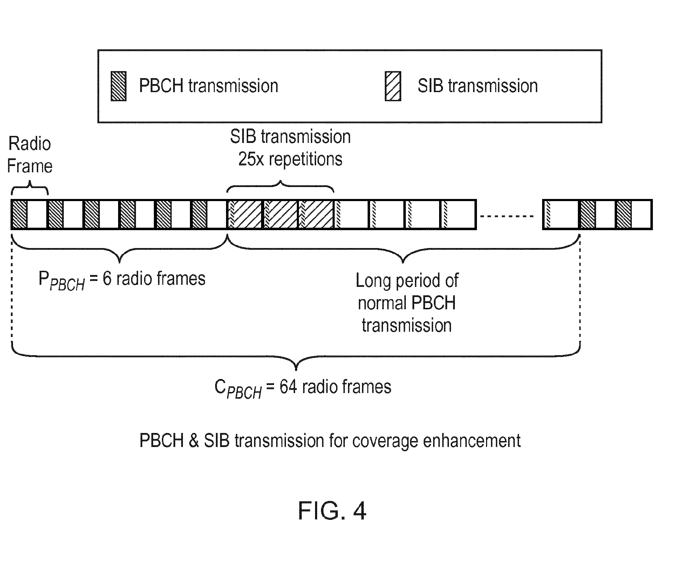

The resulting PBCH and SIB transmission pattern associated with such an embodiment is shown in Figure 4.

It is, of course, possible to implement other SIB transmission patterns, such as, for example, implementation of a pattern having a gap between the end of a PBCH intense burst period and the start of the SIB transmission.

Aspects and embodiments provide a method to allocate a SIB for MTC UE requiring coverage extension. Existing solutions include: blind decoding which requires an increase to user equipment complexity or reduction of the robustness of the PBCH by including SIB in MIB

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A wireless telecommunication network base station method comprising:

   encoding, in a master information block, resource allocation information relating to a location of a system information block.

2. A method according to claim 1, wherein encoding resource allocation information comprises encoding a location index for inclusion in said master information block, said location index identifying a location of at least one physical resource block containing said system information block.

**3.** A method according to claim 2, wherein said location index comprises one of a plurality of values, each value identifying a different location of at least one physical resource block containing said system information block.

**4.** A method according to any preceding claim, comprising:

encoding, on a first downlink channel between said base station and user equipment carrying said master information block, a repetition index identifying a number of times that transmissions are repeated by at least one other channel between said base station and user equipment.

**5.** A method according to claim 4, wherein said repetition index comprises one of a plurality of values, each value identifying a different number of times that that transmissions are repeated by said at least one other channel.

**6.** A method according to any one of claims 2 to 5, comprising:

selecting at least one of said location index and said repetition index to serve different user equipment.

**7.** A method according to any preceding claim, comprising: repeating said master information block including said encoding resource allocation information at least once within a radio frame of a downlink transmission channel.

**8.** A method according to claim 7, wherein each radio frame comprises a plurality of sub-frames and said master information block is repeated in a corresponding plurality of sub-frames.

**9.** A method according to any preceding claim, comprising: repeating said system information block at least once within a radio frame of a downlink transmission channel.

**10.** A wireless telecommunication network base station, comprising:

encoding logic operable to encode resource allocation information relating to a location of a system information block in a master information block.

**11.** A wireless telecommunication network user equipment method comprising:

decoding resource allocation information relating to a location of a system information block from a master information block.

**12.** A method according to claim 11, comprising: decoding resource allocation information relating to a location of a system information block from an indication of system bandwidth.

**13.** A method according to claim 11 or claim 12, comprising: decoding resource allocation information relating to a location of a system information block from an indication of Cell ID.

**14.** A computer program product operable, when executed on a computer, to perform the method of any one of claims 1 to 9 or claim 13.

**15.** Wireless telecommunication network user equipment, comprising:

decoding logic operable to decode resource allocation information relating to a location of a system information block from a master information block.

**Amended claims in accordance with Rule 137(2) EPC.**

**1.** A wireless telecommunication network base station method comprising:

encoding, in a master information block, resource allocation information relating to a location of a system information block; and
encoding, on a first downlink channel between said base station and user equipment carrying said master information block, a repetition index identifying a number of times that transmissions are repeated by at least one other channel between said base station and user equipment.

**2.** A method according to claim 1, wherein encoding resource allocation information comprises encoding a location index for inclusion in said master information block, said location index identifying a location of at least one physical resource block containing said system information block.

**3.** A method according to claim 2, wherein said location index comprises one of a plurality of values, each value identifying a different location of at least one physical resource block containing said system information block.

**4.** A method according to any preceding claim, wherein said repetition index comprises one of a plurality of values, each value identifying a different number of times that transmissions are repeated by said at least one other channel.

5. A method according to any one of claims 2, 3 or 4 when dependent on claim 2 or 3, comprising:

  selecting at least one of said location index and said repetition index to serve different user equipment.

6. A method according to any preceding claim, comprising: repeating said master information block including said encoding resource allocation information at least once within a radio frame of a downlink transmission channel.

7. A method according to claim 6, wherein each radio frame comprises a plurality of sub-frames and said master information block is repeated in a corresponding plurality of sub-frames.

8. A method according to any preceding claim, comprising: repeating said system information block at least once within a radio frame of a downlink transmission channel.

9. A wireless telecommunication network base station, comprising:

  encoding logic operable to:

    encode resource allocation information relating to a location of a system information block in a master information block; and encode, on a first downlink channel between said base station and user equipment carrying said master information block, a repetition index identifying a number of times that transmissions are repeated by at least one other channel between said base station and user equipment.

10. A wireless telecommunication network user equipment method comprising:

  decoding resource allocation information relating to a location of a system information block from a master information block; and decoding, on a first downlink channel between said base station and user equipment carrying said master information block, a repetition index identifying a number of times that transmissions are repeated by at least one other channel between said base station and user equipment.

11. A method according to claim 10, comprising: decoding resource allocation information relating to a location of a system information block from an indication of system bandwidth.

12. A method according to claim 10 or claim 11, comprising: decoding resource allocation information relating to a location of a system information block from an indication of Cell ID.

13. A computer program product operable, when executed on a computer, to perform the method of any one of claims 1 to 8 or claim 12.

14. Wireless telecommunication network user equipment, comprising:

  decoding logic operable to:

    decode resource allocation information relating to a location of a system information block from a master information block; and decode, on a first downlink channel between said base station and user equipment carrying said master information block, a repetition index identifying a number of times that transmissions are repeated by at least one other channel between said base station and user equipment.

15. Wireless telecommunication network user equipment, according to any preceding claim, wherein:

  said decoding logic is further operable to decode resource allocation information relating to allocation of a system information block from an indication of cell ID.

Coverage Enhanced mode operation

FIG. 1

PBCH transmission for coverage enhancement

FIG. 2

PRB containing SIB

$O_{PRB}$

| |
|---|
| PRB 0 |
| PRB 1 |
| PRB 2 |
| PRB 3 |
| PRB 4 |
| PRB 5 |
| PRB 6 |
| PRB 7 |
| PRB 8 |
| PRB 9 |
| PRB 10 |
| PRB 11 |
| PRB 12 |
| PRB 13 |
| PRB 14 |
| PRB 15 |
| PRB 16 |
| PRB 17 |
| PRB 18 |
| PRB 19 |
| PRB 20 |
| PRB 21 |
| PRB 22 |
| PRB 23 |
| PRB 24 |

SIB PRB allocation

FIG. 3

PBCH & SIB transmission for coverage enhancement

FIG. 4

**Europäisches Patentamt**
**European Patent Office**
**Office européen des brevets**

# EUROPEAN SEARCH REPORT

Application Number

EP 13 30 6141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2012/327895 A1 (WALLEN ANDERS [SE] ET AL) 27 December 2012 (2012-12-27)<br>* paragraphs [0068], [0077]; figures 9, 10 * | 1-3, 10-15<br>4-9 | INV.<br>H04W4/00<br>H04L5/00<br>H04L1/00<br>H04L1/08 |
| X<br>A | US 2013/136098 A1 (LI YING [US] ET AL) 30 May 2013 (2013-05-30)<br>* paragraphs [0042] - [0046]; figures 3-12 * | 1-3, 10-15<br>4-9 | |
| X | HUAWEI ET AL: "Coverage enhancement for physical channels and signals for low-cost MTC",<br>3GPP DRAFT; R1-130017, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. RAN WG1, no. St. Julian; 20130128 - 20130201<br>19 January 2013 (2013-01-19), XP050663499,<br>Retrieved from the Internet:<br>URL:http://www.3gpp.org/ftp/tsg_ran/WG1_RL1/TSGR1_72/Docs/<br>[retrieved on 2013-01-19]<br>* sections 2.2, 2.4, 9.5.4; figure 2 * | 1-15 | |

-/--

TECHNICAL FIELDS SEARCHED (IPC)

H04W
H04L

The present search report has been drawn up for all claims

| Place of search | Date of completion of the search | Examiner |
|---|---|---|
| The Hague | 10 December 2013 | Papadogiannis, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

## EUROPEAN SEARCH REPORT

Application Number

EP 13 30 6141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALCATEL-LUCENT ET AL: "PBCH coverage extension for MTC devices", 3GPP DRAFT; R1-130938 - REL-12 MTC COVERAGE - PBCH COVERAGE V0.4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Chicago, USA; 20130415 - 20130419 6 April 2013 (2013-04-06), XP050696937, Retrieved from the Internet: URL:http://www.3gpp.org/ftp/tsg_ran/WG1_RL 1/TSGR1_72b/Docs/ [retrieved on 2013-04-06] * sections 2, 3; figures 1, 2 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 10 December 2013 | Papadogiannis, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                     EP 13 30 6141

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2013

| Patent document cited in search report | Publication date | Patent family member(s) | | Publication date |
|---|---|---|---|---|
| US 2012327895 A1 | 27-12-2012 | US | 2012327895 A1 | 27-12-2012 |
| | | WO | 2013000818 A1 | 03-01-2013 |
| US 2013136098 A1 | 30-05-2013 | US | 2013136098 A1 | 30-05-2013 |
| | | WO | 2013081376 A1 | 06-06-2013 |

EPO FORM P0459

For more details about this annex : see Official Journal of the European Patent Office, No. 12/82